# FASCICULE DE BREVET EUROPEEN

(11) **EP 3 201 070 B1**
(45) Date de publication et mention de la délivrance du brevet: **04.11.2020**
(21) Numéro de dépôt: 15778355.6
(22) Date de dépôt: 08.09.2015
(51) Int. Cl.: B62D 25/12, B62D 65/06

(54) **SYSTÈME DE MONTAGE À COULISSEMENT ET AUTO-CENTRAGE D'UN CAPOT**
VORRICHTUNG ZUR VERSCHIEBBAREN MONTAGE UND SELBSTZENTRIERUNG EINER HAUBE
SYSTEM FOR SLIDABLY MOUNTING AND SELF-CENTERING A HOOD

(30) Priorité: 30.09.2014 FR 1459262
(43) Date de publication de la demande: 09.08.2017
(73) Titulaire: Renault s.a.s., 92100 Boulogne-Billancourt (FR)
(72) Inventeur: DO NASCIMENTO, Silvino, F-78390 Bois D'Arcy (FR); PERREUX, Philippe, F-78620 L'Etang La Ville (FR); PEROT, Patrick, F-78960 Voisins Le Bretonneux (FR)
(86) Numéro de dépôt international: PCT/FR2015/052377
(87) Numéro de publication internationale: WO 2016/051036

(56) Documents cités:
- DE-A1- 19 718 594
- FR-A1- 2 986 766

## Description

L'invention concerne un système de montage d'un capot de véhicule automobile sur une caisse du véhicule, comprenant un élément de guidage à coulissement du capot par rapport à la caisse dans une direction longitudinale du véhicule, un élément de blocage du capot immobilisant le capot par rapport à la caisse dans une position fermée dans laquelle il obture un compartiment moteur, l'élément de blocage venant occuper un état activé par la mise en oeuvre d'un mouvement de coulissement du capot par rapport à la caisse dans la direction longitudinale du véhicule selon un premier sens.

L'invention a pour objet aussi un véhicule automobile comprenant un capot monté sur une caisse du véhicule automobile grâce à un tel système de montage.

### État de la technique

Dans la construction d'un véhicule automobile, il est nécessaire généralement de monter et de positionner de très nombreux éléments fonctionnels, par exemple des éléments de carrosserie tels qu'un capot, par rapport à la caisse de structure du véhicule automobile.

Classiquement le capot destiné à occuper une position ouverte dans laquelle il ferme le compartiment moteur du véhicule prévoit un montage du capot par articulation, ce qui peut s'avérer problématique pour des raisons pratiques ou de coût notamment. Un tel montage est par exemple obtenu en prévoyant une articulation à pivotement entre le capot et une pièce appelée « support de capot » destinée à supporter le capot lorsqu'il est position fermée. Un tel support de capot est lui-même fixé à un élément de structure de la caisse. Le document FR-A1-2844499 décrit par exemple une telle solution.

Ce type de support de capot participe au montage et au positionnement du capot, mais le maintien en position fermée (contre un mouvement d'ouverture vers le dessus) doit être obtenu à l'aide d'un élément de blocage complémentaire, déporté par rapport au support de capot. Cette solution reste donc complexe et relativement onéreuse en sus des problèmes liés au mouvement d'articulation.

Il a déjà été imaginé remédier à ces inconvénients par l'intermédiaire d'un système de montage du capot sur la caisse du véhicule, comprenant un élément de blocage du capot venant occuper un état activé immobilisant le capot en position fermée par la mise en œuvre d'un mouvement de coulissement du capot par rapport à la caisse dans une direction longitudinale du véhicule selon un premier sens. Le deuxième sens permet la désactivation de l'élément de blocage. Cette solution est par exemple connue du document FR2986766A1 au nom de la Demanderesse. Ce document est considéré comme l'état de la technique le plus proche de l'objet de la revendication 1.

Toutefois, il existe encore un besoin de trouver un système de montage du capot qui permette de réaliser le centrage et la mise en position du capot quelle que soit la géométrie de son environnement, ceci dans des conditions d'accès difficiles. Ceci est particulièrement problématique si les accessoires de mises en position sont non visibles.

### Objet de l'invention

Le but de la présente invention est de proposer un système de montage d'un capot de véhicule automobile sur une caisse du véhicule qui remédie aux inconvénients présentés ci-dessus.

Ce but peut être atteint par l'intermédiaire d'un système de montage d'un capot de véhicule automobile sur une caisse du véhicule, comprenant un élément de guidage à coulissement du capot par rapport à la caisse dans une direction longitudinale du véhicule, un élément de blocage du capot immobilisant le capot par rapport à la caisse dans une position fermée dans laquelle il obture un compartiment moteur, l'élément de blocage venant occuper un état activé par la mise en œuvre d'un mouvement de coulissement du capot par rapport à la caisse dans la direction longitudinale du véhicule selon un premier sens, l'élément de guidage comprenant un élément d'auto-centrage du capot par rapport à la caisse selon une direction transversale au véhicule durant le coulissement du capot dans le premier sens, l'élément d'auto-centrage comprend une première pièce destinée à être solidaire du capot lorsque le capot est dans sa position fermée et une deuxième pièce destinée à être solidaire du capot lorsque le capot est dans sa position fermée, la première pièce coopérant avec la deuxième pièce par contact et glissement assurant un guidage transversal de la première pièce par rapport à la deuxième pièce durant le mouvement du coulissement du capot selon le premier sens dans la direction longitudinale et assurant que la position fermée du capot soit une position prédéterminée dans la direction transversale constante par rapport à la caisse, notamment centrée, des couples de première et deuxième pièces étant disposés à droite et à gauche vu la direction transversale.

Selon un mode de réalisation particulier, l'élément d'auto-centrage assure un calage du capot par rapport à la caisse dans la direction transversale lorsque le capot occupe sa position fermée.

De préférence, l'élément d'auto-centrage est configuré de sorte à être activé automatiquement par le mouvement de coulissement du capot vers sa position fermée dans le premier sens.

Selon un autre mode de réalisation, l'élément de blocage vient occuper un état désactivé par un mouvement de coulissement du capot dans la direction longitudinale selon un deuxième sens opposé audit premier sens.

Le système de montage peut comprendre au moins un verrou actionnable en rotation pour varier entre une configuration de verrouillage interdisant le mouvement de coulissement du capot selon le deuxième sens dans la direction longitudinale et une configuration de déverrouillage autorisant le mouvement de coulissement du capot selon le premier sens dans la direction longitudinale.

Le mouvement de coulissement du capot selon le premier sens dans la direction longitudinale est commandé par le passage du verrou de la configuration de déverrouillage à la configuration de verrouillage.

Selon un mode de réalisation, l'une des première et deuxième pièces, notamment la deuxième pièce, est constituée par un tenon et l'autre des première et deuxième pièces, notamment la première pièce, est constituée par un logement recevant automatiquement le tenon durant le mouvement du coulissement du capot selon le premier sens dans la direction longitudinale.

L'une au moins des première et deuxième pièces, notamment le tenon, peut comprendre une partie élastiquement déformable configurée de sorte à se déformer élastiquement durant le mouvement du coulissement du capot selon le premier sens dans la direction longitudinale, d'une manière assurant l'auto-centrage du capot par équilibrage transversal de la position relative des première et deuxième pièces dans la direction transversale.

Le système de montage peut comprendre des éléments de butée destinés à être solidaires de la caisse et interdisant le mouvement de coulissement du capot dans la direction longitudinale selon le premier sens lorsque le capot occupe sa position fermée.

Un véhicule automobile pourra ensuite comprendre un capot monté sur une caisse du véhicule automobile grâce à un tel système de montage.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- les figures 1 et 2 sont des vues schématiques de dessous d'un capot monté par l'intermédiaire d'un exemple de système de montage selon l'invention,
- la figure 3 est une vue en perspective de dessous du capot utilisé avec le système de montage,
- la figure 4 est une vue de détail du dessous du capot,
- et la figure 5 représente la coopération entre des première et deuxième pièces de l'élément d'auto-centrage.

### Description de modes préférentiels de l'invention

La description est faite en référence à un repère orthonormé (X, Y, Z) associé classiquement à un véhicule automobile, dans lequel X est la direction longitudinale avant-arrière du véhicule dirigée vers l'arrière, Y est la direction transversale droite-gauche au véhicule, qui est horizontale et perpendiculaire à X, dirigée vers la droite, et Z est la direction verticale dirigée vers le dessus.

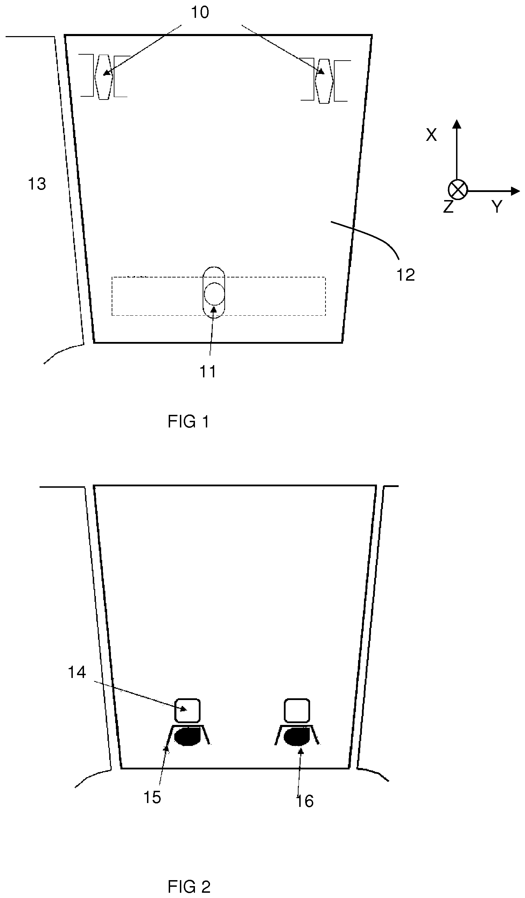

L'invention qui va être faite ci-après en référence aux figures 1 à 5 annexées concerne essentiellement un système de montage d'un capot 12 de véhicule automobile sur une caisse du véhicule un élément de guidage 10, 11 à coulissement du capot 12 par rapport à la caisse selon la direction longitudinale X. Il comprend aussi un élément de blocage du capot immobilisant le capot 12 par rapport à la caisse dans une position fermée dans laquelle il obture un compartiment moteur. L'élément de blocage vient occuper un état activé par la mise en œuvre d'un mouvement de coulissement du capot 12 par rapport à la caisse dans la direction longitudinale X du véhicule selon un premier sens, dirigé vers le haut sur les figures 1 et 2, c'est-à-dire dirigé vers l'arrière du véhicule. Sur les figures 1 et 2, une aile 13 du véhicule est représentée. L'élément 11 est un pion de centrage solidaire de la caisse, situé dans la partie avant du capot 12 et glissant dans une lumière oblongue allongée selon la direction longitudinale X ménagée dans le capot 12. Une organisation inversée du pion de centrage et de la lumière oblongue peut être prévue.

L'élément de blocage comprend des éléments permettant de maintenir verticalement le capot 12 vers le haut selon la direction verticale Z lorsque le capot 12 occupe sa position fermée et des éléments repérés 17 permettant de maintenir verticalement le capot 12 vers le haut selon la direction verticale Z lorsque le capot 12 occupe sa position fermée. L'invention concerne aussi un véhicule automobile comprenant le capot 12 monté sur une caisse du véhicule automobile grâce à un tel système de montage.

Selon une caractéristique importante, l'élément de guidage à coulissement comprend un élément d'auto-centrage du capot 12 par rapport à la caisse selon une direction transversale Y au véhicule durant le coulissement du capot 12 dans le premier sens et assurant que la position fermée du capot 12 soit une position prédéterminée constante dans la direction transversale Y par rapport à la caisse, notamment un position centrée selon la direction transversale Y au véhicule. Autrement dit, la position fermée prédéterminée que vient adopter le capot 12 est toujours identique, rendant l'exécution fiable et récurrente. Le centrage et la mise en position du capot 12 est possible quelle que soit la géométrie de son environnement, ceci même dans des conditions d'accès difficiles. Ceci est particulièrement avantageux si les accessoires de mises en position sont non visibles, cachés par le capot 12 et les ailes 13.

Dans un mode de réalisation particulier très avantageux pour la fiabilité du positionnement du capot 12, l'élément d'auto-centrage assure un calage du capot 12 par rapport à la caisse dans la direction transversale Y lorsque le capot 12 occupe sa position fermée. Ainsi, l'élément d'auto-centrage garantit le maintien transversal du capot 12 lorsqu'il occupe sa position fermée.

De préférence, l'élément d'auto-centrage est configuré de sorte à être activé automatiquement par le mouvement de coulissement du capot 12 vers sa position fermée dans le premier sens. Dans un tel mode de réalisation, la seule mise en œuvre du mouvement de coulissement du capot dans la direction longitudinale X selon le premier sens suffit à rendre opérant l'élément d'auto-centrage sans nécessiter d'autre opération spécifique de la part de la personne manipulant le capot 12.

Selon un mode de réalisation particulier, l'élément de blocage vient à l'inverse occuper un état désactivé par la mise en œuvre d'un mouvement de coulissement du capot 12 dans la direction longitudinale X selon un deuxième sens opposé au premier sens. Le deuxième sens est dirigé vers le bas sur les figures 1 et 2, c'est-à-dire orienté vers l'avant du véhicule selon la direction longitudinale X.

L'élément d'auto-centrage comprend, de la manière illustrée, une première pièce destinée à être solidaire du capot 12 et une deuxième pièce destinée à être solidaire du capot, la première pièce étant configurée pour coopérer automatiquement avec la deuxième pièce par contact et par glissement d'une manière assurant un guidage transversal de la première pièce par rapport à la deuxième pièce durant le mouvement du coulissement du capot 12 selon le premier sens dans la direction longitudinale X.

Le nombre de couples formés chacun par une première pièce et une deuxième pièce peut varier suivant les besoins, les coûts, la précision, la résistance etc. A titre d'exemple et de la manière illustrée, il peut être prévu une première pièce à droite vu dans la direction transversale Y et une autre première pièce à gauche vu aussi dans la direction transversale Y. Chacune de ces deux premières pièces coopère chacune avec une deuxième pièce qui lui est associée.

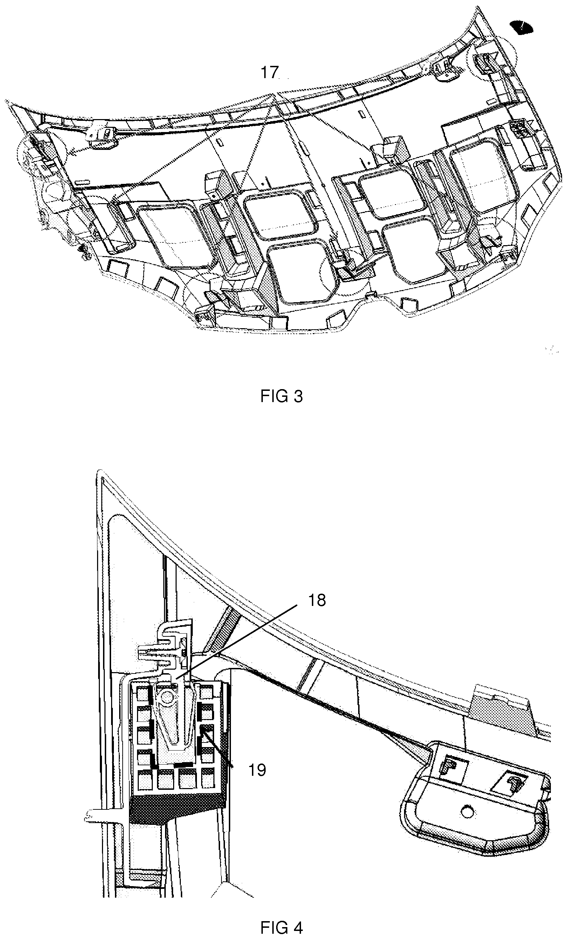

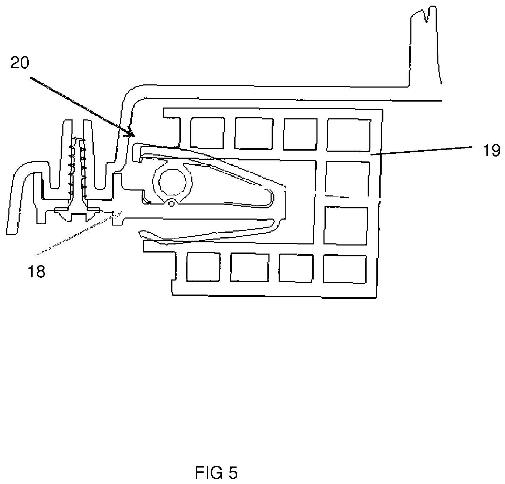

Avantageusement, pour des raisons de simplicité, de coût mais conférant toute la précision attendue, il peut être prévu que l'une des première et deuxième pièces, notamment la deuxième pièce, soit constituée par un tenon 18 et que l'autre des première et deuxième pièces, notamment la première pièce, soit constituée par un logement 19 recevant automatiquement le tenon 18 durant le mouvement du coulissement du capot 12 selon le premier sens dans la direction longitudinale X (figures 4 et 5).

De préférence, l'une au moins des première et deuxième pièces, notamment le tenon, comprend au moins une partie élastiquement déformable 20, par exemple sous la forme d'une ailette flexible, configurée de sorte à se déformer élastiquement durant le mouvement du coulissement du capot 12 selon le premier sens dans la direction longitudinale X, d'une manière assurant l'auto-centrage du capot 12 par équilibrage transversal de la position relative des première et deuxième pièces dans la direction transversale Y. Cet équilibrage est directement obtenu par l'effort de rappel compté dans la direction transversale Y dû à l'action naturelle de rappel élastique de chaque partie 20 lorsqu'elle occupe un état déformé élastiquement.

A titre d'exemple répondant aux besoins précisés ci-dessus, la matière utilisée pour les pièces 18, 19 peut être du polyamide ou une matière thermoplastique à base de polyoxyméthylène.

Le système de montage peut comprendre des éléments de butée 14 (figure 2) destinés à être solidaires de la caisse et interdisant le mouvement de coulissement du capot 12 dans la direction longitudinale X selon le premier sens lorsque le capot 12 occupe sa position fermée.

Toujours en référence à la figure 2, le système de montage peut comprendre au moins un verrou 16 actionnable en rotation pour varier entre une configuration de verrouillage interdisant le mouvement de coulissement du capot 12 selon le deuxième sens dans la direction longitudinale X et une configuration de déverrouillage autorisant le mouvement de coulissement du capot 12 selon le premier sens dans la direction longitudinale X. Chaque verrou 16 peut être aménagé dans un logement 15 prévu dans le capot 12 (figure 2).

Selon un mode de réalisation particulier, présentant l'avantage de sa facilité de mise en œuvre, le mouvement de coulissement du capot 12 selon le premier sens dans la direction longitudinale X est commandé par le passage du verrou 16 de la configuration de déverrouillage à la configuration de verrouillage.

La solution précédemment décrite permet un centrage efficace et un montage simple tout en préservant l'aspect et l'esthétique et sans être visible lorsque le capot 12 occupe sa position fermée.

## Revendications

1. Système de montage d'un capot de véhicule automobile sur une caisse du véhicule, comprenant un élément de guidage (10, 11) à coulissement du capot (12) par rapport à la caisse dans une direction longitudinale (X) du véhicule, un élément de blocage du capot (12) immobilisant le capot (12) par rapport à la caisse dans une position fermée dans laquelle il obture un compartiment moteur, l'élément de blocage venant occuper un état activé par la mise en œuvre d'un mouvement de coulissement du capot (12) par rapport à la caisse dans la direction longitudinale (X) du véhicule selon un premier sens, l'élément de guidage (10, 11) comprend un élément d'auto-centrage (18, 19, 20) du capot (12) par rapport à la caisse selon une direction transversale (Y) au véhicule durant le coulissement du capot (12) dans le premier sens, **caractérisé en ce que** l'élément d'auto-centrage (18, 19, 20) comprend une première pièce destinée à être solidaire du capot lorsque le capot (12) est dans sa position fermée et une deuxième pièce destinée à être solidaire du capot (12) lorsque le capot (12) est dans sa position fermée, la première pièce coopérant avec la deuxième pièce par contact et glissement assurant un guidage transversal de la première pièce par rapport à la deuxième pièce durant le mouvement du coulissement du capot (12) selon le premier sens dans la direction longitudinale (X) et assurant que la position fermée du capot (12) soit une position prédéterminée dans la direction transversale (Y) constante par rapport à la caisse, notamment centrée, des couples de première et deuxième pièces étant disposés à droite et à gauche vu la direction transversale (Y).

2. Système de montage selon la revendication 1, **caractérisé en ce que** l'élément d'auto-centrage (18, 19, 20) assure un calage du capot (12) par rapport à la caisse dans la direction transversale (Y) lorsque le capot (12) occupe sa position fermée.

3. Système de montage selon l'une des revendications 1 ou 2, **caractérisé en ce que** l'élément d'auto-centrage (18, 19, 20) est configuré de sorte à être activé automatiquement par le mouvement de coulissement du capot (12) vers sa position fermée dans le premier sens.

4. Système de montage selon l'une des revendications 1 à 3, **caractérisé en ce que** l'élément de blocage vient occuper un état désactivé par un mouvement de coulissement du capot (12) dans la direction longitudinale (X) selon un deuxième sens opposé audit premier sens.

5. Système de montage selon la revendication 4, **caractérisé en ce qu'**il comprend au moins un verrou (16) actionnable en rotation pour varier entre une configuration de verrouillage interdisant le mouvement de coulissement du capot (12) selon le deuxième sens dans la direction longitudinale (X) et une configuration de déverrouillage autorisant le mouvement de coulissement du capot (12) selon le premier sens dans la direction longitudinale (X).

6. Système de montage selon la revendication 5, **caractérisé en ce que** le mouvement de coulissement du capot (12) selon le premier sens dans la direction longitudinale (X) est commandé par le passage du verrou (16) de la configuration de déverrouillage à la configuration de verrouillage.

7. Système de montage selon l'une quelconque des revendications 1 à 6, **caractérisé en ce que** l'une des première et deuxième pièces, notamment la deuxième pièce, est constituée par un tenon (18) et l'autre des première et deuxième pièces, notamment la première pièce, est constituée par un logement (19) recevant automatiquement le tenon (18) durant le mouvement du coulissement du capot (12) selon le premier sens dans la direction longitudinale (X).

8. Système de montage selon l'une quelconque des revendications 1 à 7, **caractérisé en ce que** l'une au moins des première et deuxième pièces, notamment le tenon, comprend une partie (20) élastiquement déformable configurée de sorte à se déformer élastiquement durant le mouvement du coulissement du capot (12) selon le premier sens dans la direction longitudinale (X), d'une manière assurant l'auto-centrage du capot (12) par équilibrage transversal de la position relative des première et deuxième pièces dans la direction transversale (Y).

9. Système de montage selon l'une des revendications 1 à 8, **caractérisé en ce qu'**il comprend des éléments de butée (14) destinés à être solidaires de la caisse et interdisant le mouvement de coulissement du capot (12) dans la direction longitudinale (X) selon le premier sens lorsque le capot (12) occupe sa position fermée.

10. Véhicule automobile comprenant un capot (12) monté sur une caisse du véhicule automobile, **caractérisé en ce qu'**il comprend un système de montage selon l'une quelconque des revendications 1 à 9.

## Patentansprüche

1. System zur Montage einer Kraftfahrzeughaube auf einer Karosserie des Fahrzeugs, welches ein Führungselement (10, 11) für das Gleiten der Haube (12) in Bezug auf die Karosserie in einer Längsrichtung (X) des Fahrzeugs umfasst, wobei ein Element zur Sicherung der Haube (12) die Haube (12) in Bezug auf die Karosserie in einer geschlossenen Position arretiert, in welcher sie einen Motorraum verschließt, wobei das Sicherungselement durch die Ausführung einer Gleitbewegung der Haube (12) in Bezug auf die Karosserie in der Längsrichtung (X) des Fahrzeugs in einer ersten Bewegungsrichtung in einen aktivierten Zustand gelangt, wobei das Führungselement (10, 11) ein Element zur Selbstzentrierung (18, 19, 20) der Haube (12) in Bezug auf die Karosserie in einer Querrichtung (Y) des Fahrzeugs während des Gleitens der Haube (12) in der ersten Bewegungsrichtung umfasst, **dadurch gekennzeichnet, dass** das Selbstzentrierungselement (18, 19, 20) ein erstes Teil, das dazu bestimmt ist, fest mit der Haube verbunden zu sein, wenn sich die Haube (12) in ihrer geschlossenen Position befindet, und ein zweites Teil, das dazu bestimmt ist, fest mit der Haube (12) verbunden zu sein, wenn sich die Haube (12) in ihrer geschlossenen Position befindet, umfasst, wobei das erste Teil mit dem zweiten Teil durch Kontakt und Gleiten zusammenwirkt, was eine Querführung des ersten Teils in Bezug auf das zweite Teil während der Bewegung des Gleitens der Haube (12) in der ersten Bewegungsrichtung in der Längsrichtung (X) sicherstellt und sicherstellt, dass die geschlossene Position der Haube (12) eine vorbestimmte Position in der Querrichtung (Y) ist, die konstant in Bezug auf die Karosserie ist, insbesondere zentriert, wobei Paare aus einem ersten und einem zweiten Teil rechts und links, in der Querrichtung (Y) gesehen, angeordnet sind.

2. System zur Montage nach Anspruch 1, **dadurch gekennzeichnet, dass** das Selbstzentrierungselement (18, 19, 20) eine Fixierung der Haube (12) in Bezug auf die Karosserie in der Querrichtung (Y) sicherstellt, wenn die Haube (12) ihre geschlossene Position einnimmt.

3. System zur Montage nach einem der Ansprüche 1 oder 2, **dadurch gekennzeichnet, dass** das Selbstzentrierungselement (18, 19, 20) derart gestaltet ist, dass es durch die Gleitbewegung der Haube (12) zu ihrer geschlossenen Position hin in der ersten Bewegungsrichtung automatisch aktiviert wird.

4. System zur Montage nach einem der Ansprüche 1 bis 3, **dadurch gekennzeichnet, dass** das Sicherungselement durch eine Gleitbewegung der Haube (12) in der Längsrichtung (X) in einer zweiten Bewegungsrichtung, die zur ersten Bewegungsrichtung entgegengesetzt ist, in einen deaktivierten Zustand gelangt.

5. System zur Montage nach Anspruch 4, **dadurch gekennzeichnet, dass** es wenigstens einen Riegel (16) umfasst, der drehend betätigbar ist, um zwischen einer Verriegelungskonfiguration, welche die Gleitbewegung der Haube (12) in der zweiten Bewegungsrichtung in der Längsrichtung (X) verhindern, und einer Entriegelungskonfiguration, welche die Gleitbewegung der Habe (12) in der ersten Bewegungsrichtung in der Längsrichtung (X) gestattet, zu wechseln.

6. System zur Montage nach Anspruch 5, **dadurch gekennzeichnet, dass** die Gleitbewegung der Haube (12) in der zweiten Bewegungsrichtung in der Längsrichtung (X) durch den Wechsel des Riegels (16) von der Entriegelungskonfiguration zur Verriegelungskonfiguration gesteuert wird.

7. System zur Montage nach einem der Ansprüche 1 bis 6, **dadurch gekennzeichnet, dass** eines von dem ersten und zweiten Teil, insbesondere das zweite Teil, aus einem Zapfen (18) besteht und das andere von dem ersten und zweiten Teil, insbesondere das erste Teil, aus einer Vertiefung (19) besteht, die während der Bewegung des Gleitens der Haube (12) in der ersten Bewegungsrichtung in der Längsrichtung (X) automatisch den Zapfen (18) aufnimmt.

8. System zur Montage nach einem der Ansprüche 1 bis 7, **dadurch gekennzeichnet, dass** wenigstens eines von dem ersten und zweiten Teil, insbesondere der Zapfen, einen elastisch verformbaren Teil (20) umfasst, der derart gestaltet ist, dass er sich während der Bewegung des Gleitens der Haube (12) in der ersten Bewegungsrichtung in der Längsrichtung (X) auf eine Weise elastisch verformt, welche die Selbstzentrierung der Haube (12) durch Querausgleich der relativen Position des ersten und des zweiten Teils in der Querrichtung (Y) sicherstellt.

9. System zur Montage nach einem der Ansprüche 1 bis 8, **dadurch gekennzeichnet, dass** es Anschlagelemente (14) umfasst, die dazu bestimmt sind, fest mit der Karosserie verbunden zu sein, und die Gleitbewegung der Haube (12) in der Längsrichtung (X) in der ersten Bewegungsrichtung verhindern, wenn die Haube (12) ihre geschlossene Position einnimmt.

10. Kraftfahrzeug, welches eine Haube (12) umfasst, die auf einer Karosserie des Kraftfahrzeugs angebracht ist, **dadurch gekennzeichnet, dass** es ein System zur Montage nach einem der Ansprüche 1 bis 9 umfasst.

## Claims

1. System for mounting a motor vehicle hood on the body of the vehicle, comprising an element (10, 11) for slidably guiding the hood (12) relative to the body in a longitudinal direction (X) of the vehicle, an element for locking the hood (12) immobilizing the hood (12) relative to the body in a closed position, in which it seals off an engine compartment, the locking element assuming an activated state as a result of a sliding movement of the hood (12) relative to the body in the longitudinal direction (X) of the vehicle in a first direction, the guide element (10, 11) comprises an element (18, 19, 20) for self-centring the hood (12) relative to the body in a direction (Y) transverse to the vehicle while the hood (12) slides in the first direction, **characterized in that** the self-centring element (18, 19, 20) comprises a first component intended to be secured to the hood when the hood (12) is in its closed position and a second component intended to be secured to the hood (12) when the hood (12) is in its closed position, the first component cooperating with the second component by contact and sliding ensuring a transverse guiding of the first component relative to the second component during the movement involving the sliding of the hood (12) in the first direction in the longitudinal direction (X) and ensuring that the closed position of the hood (12) is a predetermined position in the transverse direction (Y) that is constant relative to the body, notably centred, pairs of first and second components being arranged on the right and on the left when seen from the transverse direction (Y).

2. Mounting system according to Claim 1, **characterized in that** the self-centring element (18, 19, 20) ensures a bracing of the hood (12) relative to the body in the transverse direction (Y) when the hood (12) is in its closed position.

3. Mounting system according to one of Claims 1 and 2, **characterized in that** the self-centring element (18, 19, 20) is configured so as to be activated automatically by the sliding movement of the hood (12) towards its closed position in the first direction.

4. Mounting system according to one of Claims 1 to 3, **characterized in that** the locking element assumes a deactivated state by a sliding movement of the hood (12) in the longitudinal direction (X) in a second direction opposite said first direction.

5. Mounting system according to Claim 4, **characterized in that** it comprises at least one lock (16) capable of being actuated in rotation so as to vary between a locking configuration preventing the sliding movement of the hood (12) in the second direction in the longitudinal direction (X) and an unlocking configuration permitting the sliding movement of the hood (12) in the first direction in the longitudinal direction (X).

6. Mounting system according to Claim 5, **characterized in that** the sliding movement of the hood (12) in the first direction in the longitudinal direction (X) is controlled by the passage of the lock (16) from the unlocking configuration to the locking configuration.

7. Mounting system according to any one of Claims 1 to 6, **characterized in that** one of the first and second components, notably the second component, consists of a tenon (18) and the other of the first and second components, notably the first component, consists of a housing (19) automatically receiving the tenon (18) during the sliding movement of the hood (12) in the first direction in the longitudinal direction (X).

8. Mounting system according to any one of Claims 1 to 7, **characterized in that** at least one of the first and second components, notably the tenon, comprises an elastically deformable section (20) configured in such a way as to deform elastically during the movement involving the sliding of the hood (12) in the first direction in the longitudinal direction (X), in a manner ensuring the self-centring of the hood (12) through the transverse balancing of the relative position of the first and second component in the transverse direction (Y) .

9. Mounting system according to one of Claims 1 to 8, **characterized in that** it comprises abutment elements (14) intended to be integral with the body and preventing the sliding movement of the hood (12) in the longitudinal direction (X) in the first direction when the hood (12) assumes its closed position.

10. Motor vehicle comprising a hood (12) mounted on a body of the motor vehicle, **characterized in that** it comprises a mounting system according to any one of Claims 1 to 9.
